(19) Europäisches Patentamt
European Patent Office
Office européen des brevets

(11) **EP 4 190 624 A1**

(12) **EUROPEAN PATENT APPLICATION**

(43) Date of publication:
**07.06.2023 Bulletin 2023/23**

(21) Application number: **22209028.4**

(22) Date of filing: **23.11.2022**

(51) International Patent Classification (IPC):
**B60L 15/20** (2006.01)   **B60K 1/02** (2006.01)

(52) Cooperative Patent Classification (CPC):
**B60L 15/2054; B60K 1/02;** B60L 2220/42;
B60L 2240/12; B60L 2240/423; B60L 2240/486;
B60L 2260/26; B60L 2260/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.12.2021  IT 202100030494**

(71) Applicant: **FPT Industrial S.p.A.
10156 Torino (IT)**

(72) Inventors:
• **NUDDA, Niccolò
  10156 Torino (IT)**
• **CONTARDI, Mattia
  10156 Torino (IT)**

(74) Representative: **Fiume, Orazio
Praxi Intellectual Property S.p.A.
Corso Vittorio Emanuele II, 3
10125 Torino (IT)**

(54) **METHOD OF MANAGEMENT OF AN ELECTRIC PROPULSION SYSTEM AND ELECTRIC PROPULSION SYSTEM IMPLEMENTING THE METHOD**

(57)   Electric propulsion system (S) comprising first (L1) and second (L2) propulsion lines, operably individually connectable with a common drive axle (X), each propulsion line comprising an electric motor (M1, M2), a gearbox (G1, G2) comprising at least two gear ratios (1st Gear, 2nd Gear), a clutch (C1, C2) to connect/disconnect the relative propulsion line from the respective driving axle (X, Y) of the same vehicle, processing means (ECU) configured to command the interruption of the torque delivery and consequent gear change first in the propulsion line whose maximum deliverable driving torque is lower and, at the end of the gear change, the interruption of the torque delivery and consequent gear change in the other propulsion line.

Fig. 3

## Description

### Field of the invention

The present invention relates to the field of electric propulsion systems, in particular in the field of full-electric industrial and commercial vehicles.

### State of the art

In the field of commercial and industrial vehicles, a massive electrification is underway which sees the replacement of internal combustion motors with electric motors.

However, electric motors have very different characteristics compared to internal combustion motors. Therefore, it is necessary to provide dedicated control strategies in order to guarantee routes, robustness and performance suitable for the purposes.

### Summary of the invention

The object of the present invention is to present a management method of a propulsion system and an improved or alternative propulsion system with respect to the prior art. The present invention is based on a propulsion system comprising two parallel propulsion lines which can be selectively connected to a corresponding driving axle. Therefore, this solution finds application in 4x4 vehicles and above all in 6x4 industrial vehicles, in which two out of three axles are driving axles.

Each propulsion line comprises, in succession, an electric motor, a gearbox and a clutch for its connection to the respective axle.

The control of the first propulsion line is independent of the second propulsion line, so that while, for example, the first line is operative, the second one can be deactivated or it can operate differently from the first line. Depending on the torque request to the propulsion system and the vehicle speed, a processing unit distributes the torque between the propulsion lines.

In some cases, this distribution is not equal and the two propulsion lines work with different gear ratios and torque values.

As the speed of the driving axles and therefore of the vehicle varies, the operating conditions of the two propulsion lines vary and the simultaneous gear change on both propulsion lines may be required. However, this involves the interruption of the torque delivery by the propulsion system for the time necessary to carry out this gear change. According to the present invention, to avoid interruption of the torque delivered by the propulsion system, the gear ratio is changed sequentially between the two propulsion lines. Furthermore, the propulsion line which remains operational while the other carries out the gear change, supplies the entire torque request to the propulsion system or the maximum torque which can be supplied by the same propulsion line. After the first of the two propulsion lines has operated the gear change, the entire torque request to the propulsion system is supplied by the first propulsion line, while the second carries out the gear change.

According to a preferred aspect of the invention, the first propulsion line which changes the gear ratio is:

-   Either of the two when both propulsion lines have the same maximum torque value that can be delivered at the moment in which the gear change is requested on both propulsion lines,
-   The one that has a lower maximum torque value between the two propulsion lines when the propulsion lines have a different maximum torque that can be delivered, at the moment in which the gear change is requested on both propulsion lines.

This execution order selection strategy ensures less thermal stress on the electric motors.

Although both propulsion lines can be equipped with constructively identical electric motors, the maximum torque that can be delivered can be different.

This depends on the fact that the maximum torque available is a function of the temperature of the electric motor itself.

It is in fact known that the maximum torque that can be delivered by an electric motor depends on its electro-mechanical characteristics but also on its operating conditions in terms of temperature, generally of the stator. Therefore, the maximum deliverable (or available) torque can be different even if the motors of the two propulsion lines are constructively identical to each other, since the operating temperature influences the value of the maximum deliverable torque.

The maximum drive torque that can be delivered is calculated dynamically in order to avoid damaging each of the electric motors of the two propulsion lines

The dependent claims describe preferred variants of the invention, forming an integral part of the present description.

### Brief description od the figures

Further objects and advantages of the present invention will become clear from the detailed description that follows of an embodiment of the same (and of its variants) and from the annexed drawings given for purely explanatory and non-limiting purposes, in which:

Figs. 1 and 2 show gear ratio selection diagrams in relation to the vehicle speed and the percentage torque request;
Fig. 3 shows a distribution diagram of the torque request between the motors of the two propulsion lines;
Fig. 4 schematises the propulsion system according to the present invention;
in Fig. 5 the propulsion system of Fig. 4 is schematized with indication also of the logic functions realized by means of the diagrams of figures 1 - 3;
Fig. 6 shows a flowchart for generating the diagrams of figures 1 - 3;
Fig. 7 shows an example of a flow chart representative of a preferred variant of the present invention.

The same reference numbers and letters in the figures identify the same elements or components or functions.

It should also be noted that the terms "first", "second", "third", "superior", "inferior" and the like may be used herein to distinguish various items. These terms do not imply a spatial, sequential, or hierarchical order for the modified items unless specifically indicated or inferred from the text.

The elements and characteristics illustrated in the various preferred embodiments, including the drawings, can be combined with each other without however departing from the scope of protection of the present application as described below.

**Detailed description**

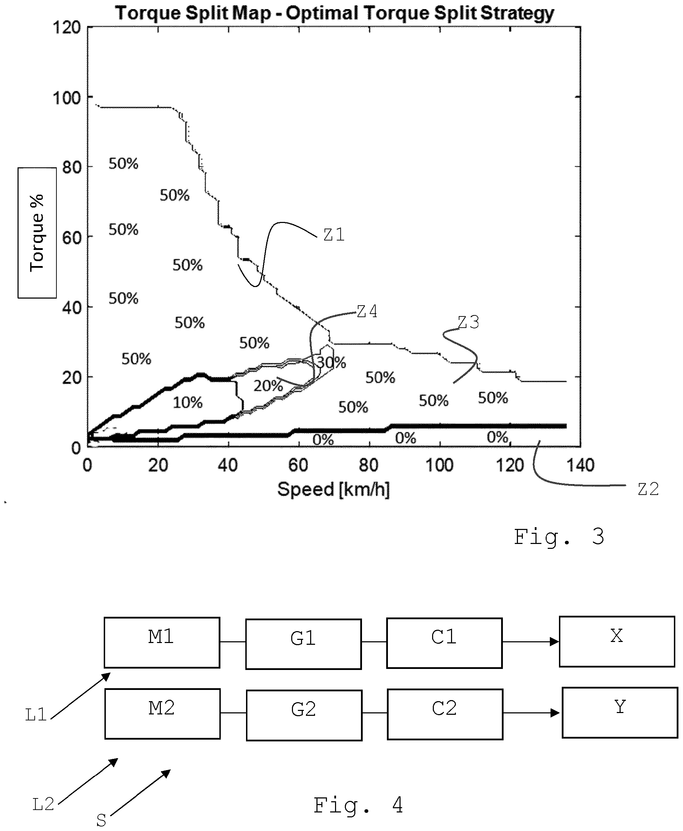

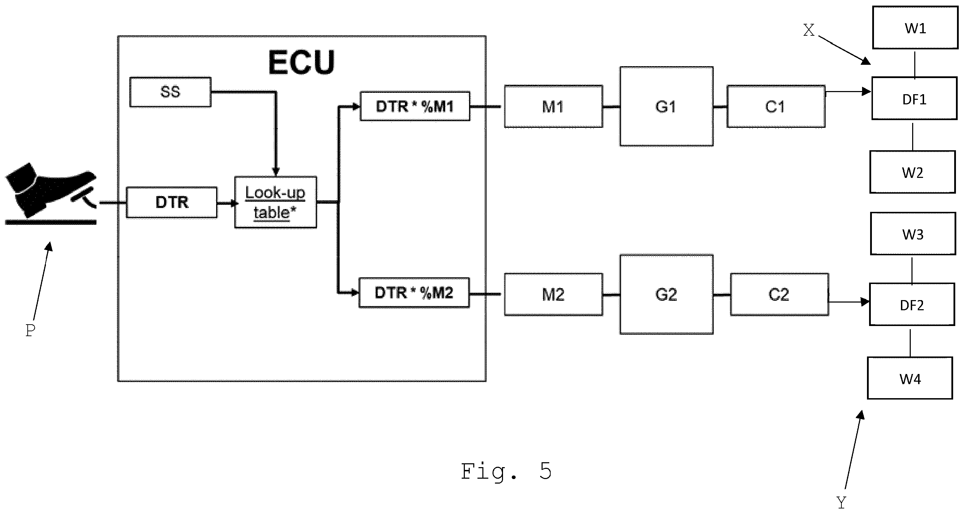

With reference to figures 4 and 5 a propulsion system according to the present invention is shown.

The system comprises two propulsion lines L1 and L2.

Each propulsion line comprises an electric motor generator M1, M2, a gearbox G1, G2 and a clutch C1, C2.

In the following, for convenience, "motor" means an "electric motor generator".

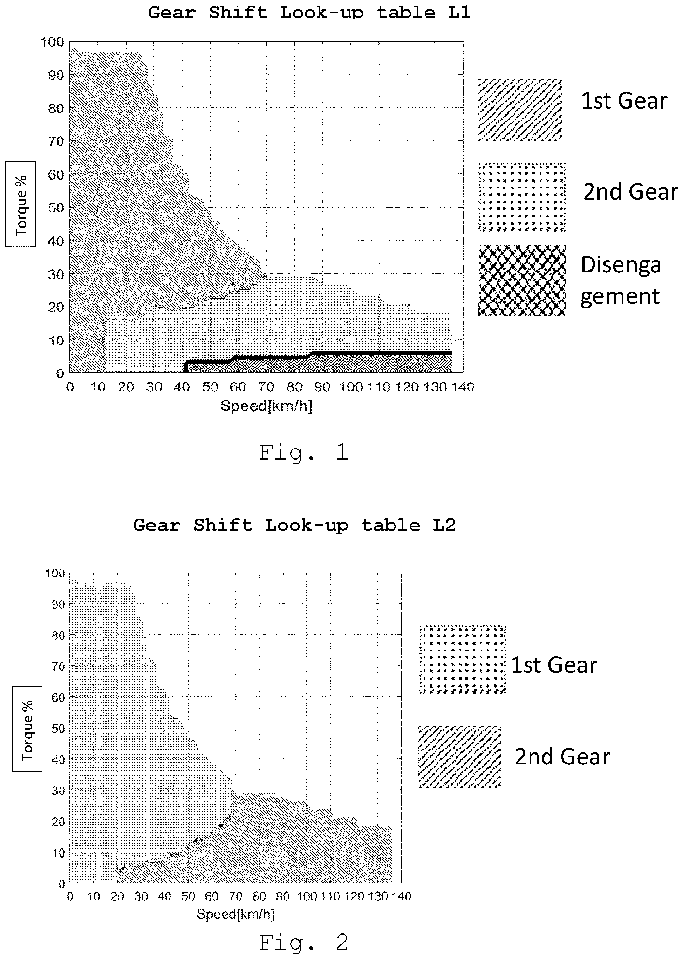

The gearbox G1, G2 is preferably with discrete ratios and preferably comprises two gear ratios, indicated in figures 1 and 2 with "1st Gear" and "2nd Gear", respectively indicating the first and second gear.

Preferably, engagement C1, C2 is achieved by means of a dog clutch which can be controlled so as to connect or disconnect the respective propulsion line from the corresponding axle, respectively X or Y, as indicated in figures 4 and 5. However, the clutch may be integrated into a gearbox capable of breaking the connection with the driving axle as well as selectively selecting a gear ratio between two or more gear ratios.

Figure 1 also provides a condition in which the first line L1 is completely disconnected from the relative driving axle X. This disconnection condition is indicated in figure 1 with the label "Disengagement". In figure 3, this disconnect condition is indicated with zero torque output 0%.

The diagrams in figures 1 - 3 show areas in the Cartesian plane as a function of vehicle speed "Vehicle speed" and the torque request "Driver Torque Demand" to the propulsion system. For example, if the maximum torque that each propulsion line can supply is 900Nm and the driver requires 70% of the maximum torque, then the torque supplied by the propulsion system is equal to 1800*0.7=1260Nm.

It is evident that the speed of the vehicle and the rotational speed of the driving axles X and Y are equivalent except for a fixed gear ratio. Therefore, it is indifferent to speak of one or the other in the following description. In Figures 1 and 2, the areas are dashed so that each point belonging to the same areas indicates the feasible gear ratio.

The two diagrams of figures 1 and 2 are very similar to each other and have a vertical area, very close to the axis of the ordinates, in which the engagement of the first gear ratio is envisaged and a horizontal area, very close to the abscissa axis, in which engagement of the second gear ratio is envisaged. The first diagram differs from the second in that it includes a third area, contiguous with the abscissa axis, according to which the disconnection of the related propulsion line is expected.

Observing the diagrams of figures 1 and 2 at the same time, it can be understood, for example, that for a vehicle speed of up to 40 km/h and for a requested torque greater than 30% of the maximum torque that can be supplied, the first propulsion line L1 and the second L2 provide for the use of the same gear ratio, i.e. first gear.

Similarly, when the torque request is 10% higher and the vehicle speed is higher than 40 km/h, the two propulsion lines adopt the same gear ratio, i.e. second gear.

Areas are foreseen in which the two propulsion lines adopt different gear ratios, above all in the torque range between 0 and 30% and in the speed range between 0 and 40 km/h, i.e. in the near air at the origin of the axes.

Under such conditions, one transmission line may adopt the first gear ratio, while the other adopts the second gear ratio.

This fact is justified by a different distribution of the driving torque between the two propulsion lines in order to minimize the losses, both electrical and mechanical, of the entire propulsion system S.

Figure 3 shows the distribution of the torque between the two transmission lines and therefore between the two axles X and Y. In particular, the diagram is drawn for the first motor M1, therefore, the torque delivered by the second motor M2 of the second transmission line propulsion corresponds to the torque complementary to the requested one to the first motor M1.

In the same areas where the two propulsion lines adopt the same gear ratio, they participate equally in the delivery of the driving torque. Instead, where percentage values of 0, 10, 15, 25% are indicated, it means that the first motor delivers 0 or 10, 15, 25% of the requested torque, while the second M2 motor delivers respectively and complementary 100, 90 , 85, 75% of the torque request, i.e. the complementary value.

At the same time, the first drive line, which delivers less torque than the second drive line, implements a higher gear ratio.

This fact leads to optimizing the global efficiency of the propulsion system. The discriminant for choosing the distribution of the torque between the propulsion lines and the gear ratios is always the minimization of the sum of the dissipated powers.

According to the present invention, when, following a variation of the control signals, it is envisaged that both propulsion lines must change their relative gear ratio, then priority is given to the propulsion line which is capable of delivering a residual torque minor and subsequently the propulsion ratio is changed on the other propulsion line. Preferably, during the gear change of the propulsion line which first performs the gear change, the other propulsion line delivers the entire drive torque request of the propulsion system, possibly saturated to the maximum torque value that can be delivered by the same.

This shift control strategy guarantees reduced discomfort for the driver and at the same time guarantees less thermal stress for the propulsion electric motors.

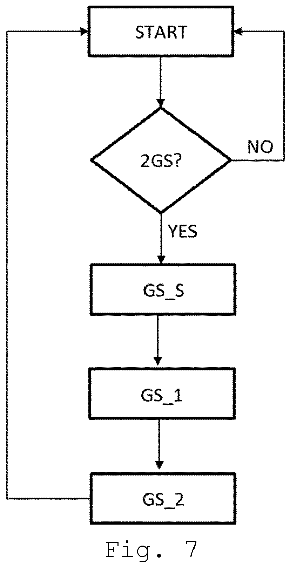

Figure 7 shows an exemplary flow chart example of the present invention.

It provides for cyclical verification, at step 2GS, if the simultaneous gear change is required on both propulsion lines.

When it appears that the simultaneous gear change on both propulsion lines is required, then the following steps are performed in succession:

- Step GS_S selection of the propulsion line which has the highest deliverable torque, when the propulsion lines have a different maximum deliverable torque, or of one of the two propulsion lines according to a predetermined selection criterion, when the propulsion lines have a equal maximum driving torque available;
- Step GS_1 delivery of the entire driving torque by the selected propulsion line and gear change by the other propulsion line;
- Step GS_2 delivery of the entire driving torque by the non-selected propulsion line and gear change by the selected propulsion line.

At the end of the gear change by both propulsion lines, it returns to the beginning of the diagram waiting for a new request for simultaneous gear change on both propulsion lines.

If, for example, the first of the two electric motors reaches a higher operating temperature, the maximum torque that can be delivered is reduced even though, at the moment in which the gear change signal is generated, it may be delivering a lower torque than to the second electric motor.

The control strategy of the present invention is particularly advantageous, since this allows the propulsion system to be able to react promptly to the torque requests of the driver even during the gear change on both propulsion lines. Furthermore, the deactivation of the driving torque delivery by the motor, which has a lower residual driving torque allows it to cool down.

It is evident that the torque supplied by the selected propulsion line is limited to the maximum torque supplied by the same propulsion line. At the same time, the other propulsion line delivers zero torque, in particular the other propulsion line is controlled exclusively to ensure gearbox synchronization, i.e. so as to minimize friction and impact on the gearbox operating parts.

When the two propulsion lines are in conditions of delivery of an equal driving torque and the simultaneous gear change is commanded, the line that carries out the gear change first can be selected in a random or balanced way, that is, in order to alternate the precedence between the two propulsion lines. This ensures an even distribution of mechanical stress.

According to a preferred variant of the invention, when the torque request is relatively low, for example below a variable threshold and function of the vehicle speed, the first propulsion line is completely disconnected by opening the clutch C1. This fact leads to several benefits:

- firstly, it allows the second motor M2, which remains operational, to work in an optimal operating point, and
- secondly, the magnetic field weakening losses that would occur if only one motor were fed, keeping the other mechanically connected to the driving axle, are also eliminated.

In fact, it is envisaged to adopt electric motors with permanent magnets. This fact entails, on the one hand, having a high specific power, but on the other, the generation of counter-electromotive force, when the motor is driven into rotation and de-energized. In fact, this counter-electromotive force involves the generation of a resistant torque, which determines a reduction in the efficiency of the propulsion system.

To overcome this resistant torque, it is possible to inject current along the so-called magnetic field weakening axis, to demagnetize the motor so as to keep the voltage induced across the motor under control. This leads to an increase in the dissipated electrical power.

It is worth noting that for low torques supplied, the diagram in figures 1 and 3 shows an approximately linear curve, which defines the border between two contiguous areas, which envisage the implementation of the second gear or the "Disengagement" disconnection of the first line L1 of propulsion in figure 1 and the delivery of 50% and 0% of the driving torque at the load of the propulsion line L1 in figure 3.

With reference to figure 3, the table, as a function of a torque request of the propulsion system and a rotation speed of the driving axle X (or Y), returns a distribution value of the torque request between the first and second line and predicts

- a first zone Z1 contiguous with the axis of the requested torque (Torque %), the torque requested from the propulsion system is equally distributed between said first and second propulsion lines;

- a second zone Z2 contiguous with the rotation speed axis of the driving axle, the torque request to the propulsion system is generated only by one of the two propulsion lines, while the other is deactivated and disconnected from the driving axle;
- a third zone Z3 contiguous with the second zone, the torque request of the propulsion system is equally distributed between said first and second propulsion lines;
- a fourth zone Z4 delimited by two curves that originate at the origin of the axes, the torque request to the propulsion system is generated in a non-uniform way between the two propulsion lines so as to minimize the electrical and mechanical losses of the propulsion system

It is evident that for particular types of electric motors or transmissions, figures 1 - 3 may vary, albeit slightly. More specifically, in the case of more than two gear ratios, the curves would change in the central area, i.e. proximal to the origin of the axes, but the concept of "disengagement" in the Z2 area remains unchanged.

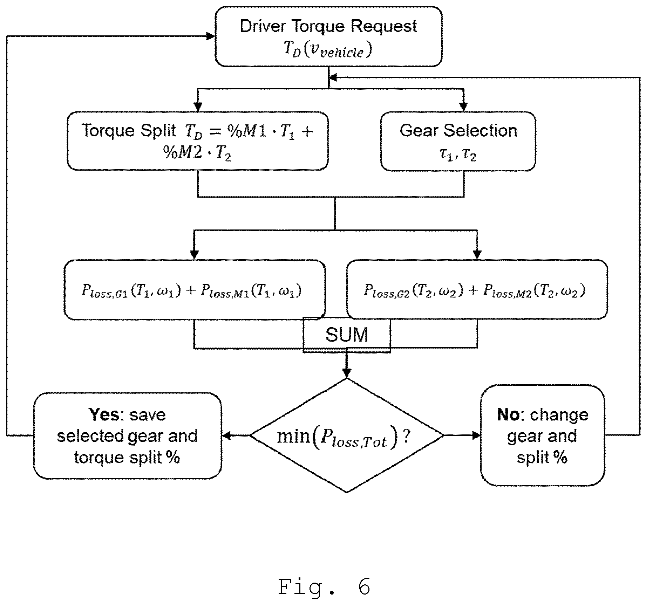

Figure 6 shows a preferred flowchart for generating the look up tables of Figures 1 - 3.

It is worth highlighting that figures 1 - 3 represent diagrams and at the same time look up tables (or simply tables).

It is important to note that in all the tables, the y-axis is represented by the torque request to the propulsion system.

The torque request varies from 0 to 100% with a predetermined step M, for example of one percentage point.

For each value of the requested torque, all possible R distributions of the torque between the two propulsion lines are considered, for example 0/100, 1/99, 2/98...etc.

It is evident that once the 50/50 distribution ratio is reached, by virtue of the fact that the two propulsion lines are identical to each other, the process stops and starts again with another value Td of d requested torque until all possible requested torque values have been explored to the propulsion system from 0 to 100%.

For each of the R distribution values in which both propulsion lines are operational, all possible combinations of gear ratios are evaluated. When each gearbox has a number N of only 2 gear ratios, the permutations P are 4, therefore there are a total of 49 × 4 + 1 × 2 combinations.

In general, the C number of combinations are:

$$\{[(M/2 - 1) \times 4] + (1 \times N)\}.$$

For each of the C combinations, the losses on both propulsion lines are calculated, both of a mechanical nature $P_{loss,G}$ and of an electrical nature $P_{loss,M}$.

It is evident that the losses depend on the rotation speed of the propulsion line. Therefore, these values are obtained for a predetermined number S of discrete vehicle speed values which correspond to the rotation speeds $\omega 1$ and $\omega 2$ of the individual propulsion lines L1 and L2.

For all the aforementioned values, the one that minimizes the sum of the losses of the entire propulsion system, for each speed value, is calculated by varying the vehicle speed. Through the method just described, the tables of figures 1 - 3 are produced.

The method can be summarized as follows:

- for each requested torque value,
- for each rotation speed value of the driving axle,
- identification of a predetermined number of distribution ratios of the torque request between the two propulsion lines, all possible permutations (P) due to the gear ratios of the two propulsion lines are considered, then
- calculation of mechanical and electrical losses and
- memorization of the permutation which allows to minimize the sum of the mechanical and electrical losses.

Figure 5 shows a logic-functional diagram of the propulsion system object of the present invention.

The signal relating to the torque requested by the driver is acquired by an inclination sensor (not shown), associated with the accelerator pedal P. A speed sensor SS is associated with the X axle to measure vehicle speed. The signals generated by the inclination sensor and by the speed sensor are sent to a processing unit Electronic Control Unit (ECU), operatively connected to said sensors. The processing unit, using the tables in figures 1 - 3, briefly referred to as the "Look-up Table", calculates the partitioning of the torque between the two propulsion lines L1 and L2 (figure 3) and the gear ratios (figure 1 and 2) of both propulsion lines.

In figure 5, the block DTR indicates the calculation of the torque requested to the propulsion system on the basis of the inclination of the accelerator pedal. Therefore, DTR*%M1 indicates the portion of torque that must be delivered by the first propulsion line L1, while DTR*%M2 indicates the remaining portion of torque that must be delivered by the second propulsion line L2. Evidently DTR*M2 = 1 - DTR*M1. Furthermore, the processing unit, by means of the diagrams in figures 1 and 2, selects the gear to be used in the gearboxes G1 and G2, or selects the disconnection of one of the propulsion lines by disengaging the relative clutch. From a hardware point of view, the output shafts of the two propulsion lines L1, L2 enter a differential DF1, DF2 of the corresponding driving axle X and Y. Each differential distributes the torque between the wheels W1/W2 or W3/W4 of the related axle.

A preferred aspect of the present invention is carrying out the following steps:

- Distribution of torque between the two propulsion lines;
- For each propulsion line, on the basis of the torque request and the vehicle speed, the gear ratio or disconnection is selected.

The aforementioned steps can be performed in the same listing sequence or simultaneously.

According to a preferred aspect of the invention, the diagram of figure 1 is temporarily attributed alternately to the first propulsion line L1 and to the second propulsion line L2. This fact ensures that the transmission lines are subject to the same wear and thermal stress.

When the processing unit calculates a new drive torque distribution, based on a variation in the inclination of the accelerator pedal and/or in the vehicle speed, it sends new instructions to the propulsion lines.

The present invention can, advantageously, be implemented through a computer program comprising coding means for carrying out one or more steps of the method, when this program is executed on a computer. Therefore, it is understood that the scope of protection extends to said computer program and also to computer-readable means comprising a recorded message, said computer-readable means comprising program coding means for carrying out one or more steps of the method, when said program is run on a computer. Variants of the non-limiting example described are possible, without however departing from the scope of protection of the present invention, including all equivalent embodiments for a person skilled in the art, to the contents of the claims.

From the description given above, the person skilled in the art is capable of realizing the object of the invention without introducing further constructive details.

**Claims**

1. Electric propulsion system (S) comprising a first (L1) and a second (L2) propulsion line, operatively connectable individually with a respective driving axle (X, Y) of the same vehicle, each propulsion line comprising

   - an electric motor (M1, M2),
   - a gearbox (G1, G2) including at least two gear ratios (1st Gear, 2nd Gear)
   - a clutch (C1, C2) to connect/disconnect the relative propulsion line from the respective driving axle (X, Y), the system comprising processing means (ECU) configured to distribute a torque request (TD) between said first and second propulsion lines and to select, for each propulsion line, a relative gear ratio and wherein when it is required to operate simultaneously the gear change for both the first and second propulsion lines, the processing means is configured to command

   - Interruption of the driving torque delivery and consequent gear change, first in a first propulsion line which has a lower maximum deliverable driving torque between the two propulsion lines and, at the end of the gear change,
   - Reactivation of the driving torque delivery of the first transmission line, interruption of the torque delivery and consequent gear change, in the other propulsion line and, at the end of the gear change,
   - Reactivation of the driving torque delivery of the other transmission line.

2. System according to claim 1, wherein said processing means are configured in such a way that when they command the interruption of torque delivery from one of the two propulsion lines, they simultaneously command the other propulsion line to deliver the entire drive torque (TD) request, limited to a maximum torque value that can be delivered by a single propulsion line.

3. System according to claim 1 or 2, wherein when required to operate the gear change of both the first and second propulsion lines and both the first and second propulsion lines deliver equal drive torque, then selecting as propulsion line delivering less drive torque, one of the two propulsion lines according to a predetermined criterion.

4. System according to claim 3, wherein said criterion is random or balanced.

5. System according to any one of claims 2 - 3, comprising the following steps in succession:

   - (GS_S step) selection of the propulsion line which has the highest deliverable drive torque, when the propulsion lines have a different maximum deliverable torque, or of one of the two propulsion lines according to a predetermined selection criterion, when the propulsion lines have the same maximum deliverable driving torque;
   - (Step GS_1) delivery of the entire requested drive torque (TD) by the selected propulsion line and gear change by the other propulsion line;
   - (Step GS_2) delivery of the entire driving torque by the non-selected propulsion line and gear change by the selected propulsion line.

6. System according to any one of the preceding claims 1 - 5, wherein said processing means are configured to differentiate a torque delivered between the first and second propulsion lines to minimize the sum of the mechanical and electrical losses of the propulsion system.

**7.** System according to claim 6, wherein said processing means comprise storage means in which one or more tables are stored which are arranged for returning a distribution ratio of the torque request between the first and second propulsion line and a relative gear according to the torque request and the rotation speed of the driving axle (X).

**8.** System according to claim 6 or 7, wherein said storage means comprise a first table in which, as a function of a torque request to the propulsion system and a rotation speed of the driving axle (X), it returns a value of distribution of the torque request between the first and second line and wherein said table is disposed in such a way that in

- a first zone (Z1) contiguous with an axis of the torque request, the torque request to the propulsion system is equally distributed between said first and second propulsion lines;
- a second zone (Z2) contiguous with an axis of the rotation speed of the driving axle, the torque request to the propulsion system is supplied only by one of the two propulsion lines, while the other propulsion line is deactivated and disconnected from the driving axle;
- a third zone (Z3) contiguous with the second zone, the torque request to the propulsion system is equally distributed between said first and second propulsion lines;
- a fourth zone (Z4) delimited by two approximately straight curves which originate at the origin of the axes, the torque request to the propulsion system is delivered in a different way between the two propulsion lines so as to minimize the electrical and mechanical losses of the propulsion system.

**9.** System according to any one of the preceding claims 1 - 8, wherein said deliverable driving torque is a function of electro-mechanical characteristics of the electric motor of the transmission line and of a current temperature of the electric motor.

**10.** The method of generating a torque split and gear ratio selection scheme for each of the propulsion lines of the propulsion system according to any one of claims 6 - 8, wherein,

- for each torque value request,
- for each rotation speed value of the driving axle,

  . identification of a predetermined number of torque split of the torque request between the two propulsion lines, considering all possible permutations (P) due to the gear ratios of the two propulsion lines, then
  . calculation of mechanical and electrical losses and
. memorization of the permutation which allows to minimize the sum of the mechanical and electrical losses.

**11.** Control method of an electric propulsion system (S) comprising a first (L1) and a second (L2) propulsion line, operatively connectable with a respective driving axle (X, Y) of the same vehicle, each propulsion including

- an electric motor (M1, M2),
- a gearbox (G1, G2) including at least two gear ratios (1st Gear, 2nd Gear)
- a clutch (C1, C2) to connect/disconnect the relative propulsion line of the driving axle (X),

the method comprising a strategy of distributing a torque (TD) request between said first and second propulsion lines and for selecting, for each propulsion line, a related gear ratio and wherein when it is required to operate a gear change of both the first and second propulsion lines, the method includes the following steps:

- Interruption of the driving torque delivery and consequent gear change, first in a first propulsion line which has a lower maximum deliverable driving torque between the two propulsion lines and, at the end of the gear change,
- Reactivation of the drive torque delivery from the first transmission line, interruption of the torque delivery and consequent gear change in the other propulsion line and, at the end of the gear change,
- Reactivation of the driving torque delivery of the other transmission line.

## Gear Shift Look-up table L1

Fig. 1

## Gear Shift Look-up table L2

Fig. 2

## Torque Split Map - Optimal Torque Split Strategy

Fig. 3

Fig. 4

Fig. 5

EP 4 190 624 A1

Fig. 6

Fig. 7

Europäisches
Patentamt
European
Patent Office
Office européen
des brevets

# EUROPEAN SEARCH REPORT

Application Number

EP 22 20 9028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/053549 A1 (CHEN WEITIAN [CA] ET AL) 25 February 2021 (2021-02-25) | 1-4,9,11 | INV. B60L15/20 B60K1/02 |
| Y | * paragraphs [0010] - [0016]; figure 1 * | 6-8,10 | |
| A | * paragraphs [0026] - [0051]; figure 2 * | 5 | |
| | ----- | | |
| X | US 2020/361303 A1 (MEYER JASON [US] ET AL) 19 November 2020 (2020-11-19) * paragraphs [0012] - [0018]; figure 1 * * figures 2-4 * | 1,2,11 | |
| | ----- | | |
| Y | JP H07 15804 A (HITACHI LTD) 17 January 1995 (1995-01-17) * figures 1-6 * | 6-8,10 | |
| | ----- | | |

**TECHNICAL FIELDS SEARCHED (IPC)**

B60L
B60K

The present search report has been drawn up for all claims

| Place of search | Date of completion of the search | Examiner |
|---|---|---|
| The Hague | 15 February 2023 | Spicq, Alexandre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 9028

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2023

| Patent document cited in search report | | Publication date | Patent family member(s) | | Publication date |
|---|---|---|---|---|---|
| US 2021053549 | A1 | 25-02-2021 | CN | 112428980 A | 02-03-2021 |
| | | | DE | 102020121790 A1 | 25-02-2021 |
| | | | US | 2021053549 A1 | 25-02-2021 |
| US 2020361303 | A1 | 19-11-2020 | CN | 111942358 A | 17-11-2020 |
| | | | US | 2020361303 A1 | 19-11-2020 |
| JP H0715804 | A | 17-01-1995 | JP | 3175895 B2 | 11-06-2001 |
| | | | JP | H0715804 A | 17-01-1995 |

EPO FORM P0459

For more details about this annex : see Official Journal of the European Patent Office, No. 12/82